# EUROPEAN PATENT APPLICATION

(11) **EP 4 650 963 A1**
(43) Date of publication of application: **19.11.2025**
(21) Application number: 25174827.3
(22) Date of filing: 07.05.2025
(51) Int. Cl.: G06F 9/50

(54) **HARDWARE THREAD ALLOCATION CONTROLLER**

(30) Priority: 15.05.2024 US 202418665362
(71) Applicant: Microsoft Technology Licensing, LLC, Redmond, WA 98052 (US)
(72) Inventor: XU, Xiaoling, Redmond, Washington, 98052 (US); SHAHID, Farhan, Redmond, Washington, 98052 (US); PETRE, George, Redmond, Washington, 98052 (US)
(74) Representative: CMS Cameron McKenna Nabarro Olswang LLP

(57) **Abstract**

A method (200) for a hardware thread allocation controller (110) of a computing device (100) includes receiving, at the hardware thread allocation controller (110), a processor thread (104) including one or more processing commands (106) to be executed, and one or more preconditions (108) for execution of the processor thread (104). The processor thread (104) is stored in a thread queue (308) of the hardware thread allocation controller (110). Based at least in part on detecting that the one or more preconditions (108) for execution are met, the processor thread (104) is assigned to a hardware accelerator (112) of the computing device (100) for execution, wherein the hardware thread allocation controller (110) is configured to receive the processor thread (104), store the processor thread (104) in the thread queue (308), and assign the processor thread (104) to the hardware accelerator (112) through hardware programming of the hardware thread allocation controller (110).

## Description

### BACKGROUND

In the realm of computer processing, processor multithreading techniques are sometimes used to improve computational efficiency and performance. Processor multithreading involves the execution of multiple threads or sequences of instructions concurrently within a single processor, leveraging the capability of the processor to handle several tasks simultaneously. This approach aims to improve the use of processor resources, reduce idle time, and improve the throughput of computing tasks.

### SUMMARY

A method for a hardware thread allocation controller of a computing device includes receiving, at the hardware thread allocation controller, a processor thread including one or more processing commands to be executed, and one or more preconditions for execution of the processor thread. The processor thread is stored in a thread queue of the hardware thread allocation controller. Based at least in part on detecting that the one or more preconditions for execution are met, the processor thread is assigned to a hardware accelerator of the computing device for execution, wherein the hardware thread allocation controller is configured to receive the processor thread, store the processor thread in the thread queue, and assign the processor thread to the hardware accelerator through hardware programming of the hardware thread allocation controller.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 schematically depicts an example computing device including a hardware thread allocation controller.
FIG. 2 illustrates an example method for a hardware thread allocation controller.
FIG. 3A schematically depicts example components of a hardware thread allocation controller.
FIG. 3B schematically depicts a thread queue management block configured to manage address space allocations of a thread queue.
FIG. 3C schematically illustrates data communication between a thread queue, header queue, and precondition queue of a hardware thread allocation controller.
FIG. 3D schematically illustrates appending a subsequent processing command to an existing processor thread in a thread queue.
FIG. 3E schematically depicts a work distribution unit assigning a processor thread to a hardware accelerator for execution.
FIG. 4 schematically shows an example computing system.

### DETAILED DESCRIPTION

In modern computing, processor multithreading is a technique that enables a processor to execute multiple threads, or sequences of instructions, concurrently. In some examples, a relatively large number of different operations are performed in parallel by different hardware accelerators - e.g., different computer processors, and/or different cores of the same processor. Orchestrating cooperation between the different accelerators working in parallel may in some cases be handled through a dedicated real-time processor, although this can be difficult to accommodate given electrical power and physical space constraints. This may lead to lower-power processing cores being integrated into a system-on-chip (SoC) of the computing device, to account for resources used to handle processor thread allocation.

In some examples, the management and allocation of processor threads in multithreading scenarios is handled predominantly by software within the operating system. While software-based thread management allows for flexibility and dynamic control, it often incurs a significant computational overhead, particularly in systems with limited processing resources. This is especially true for low-cost hardware platforms where there is an increased focus on optimizing processor efficiency and performance. The reliance on software for thread management can lead to inefficiencies in resource utilization, increased power consumption, and reduced overall system throughput.

Accordingly, the present disclosure is directed to a hardware-based thread allocation controller configured to allocate and manage processor threads. Once a processor thread is generated (e.g., by a microprocessor of the computing device), the processor thread is sent to the hardware thread allocation controller, along with one or more preconditions for execution of the processor thread. The hardware thread allocation controller then allocates the processor thread to a hardware accelerator (e.g., a processor core) of the computing device for execution. This enables more efficient, rapid, and low-overhead thread allocation and scheduling as compared to software-based solutions. This approach can beneficially enable use of lower-cost processing hardware, as the computational overhead associated with thread allocation management is decreased. Furthermore, the techniques described herein beneficially improve performance and resource utilization of the computing device by improving processor thread allocation efficiency and reducing idle time.

To summarize, software-based thread management introduces significant computational overhead that reduces the efficiency of the overall computing system. By contrast, the hardware-based thread allocation controller described herein provides the technical effect of performing processor thread allocation through hardware programming, without requiring execution of software instructions at the hardware thread allocation controller. This is done through various hardware modules of the hardware thread allocation controller, which are respectively configured to receive processor threads, store information relating to the processor threads and their related preconditions, and assign processor threads to hardware accelerators. The functionality of each hardware module is given by its hardware circuit design, rather than through execution of software instructions by a general computer processor. This provides the technical benefit of improving the efficiency of processor thread allocation in multithreading computing scenarios. This is equivalent to a reduction in electrical power consumed by the computing device, and an improvement to the processing capabilities of the computing device, as the computational overhead normally used for software-based thread management is reduced or eliminated.

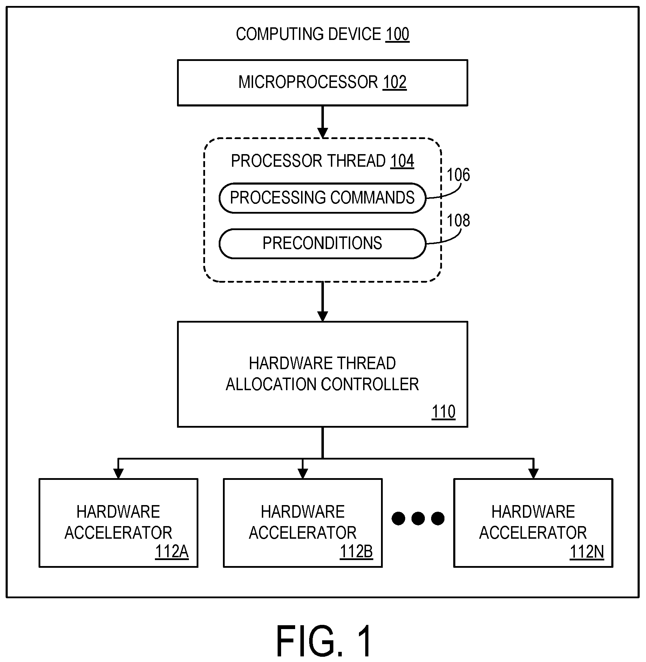

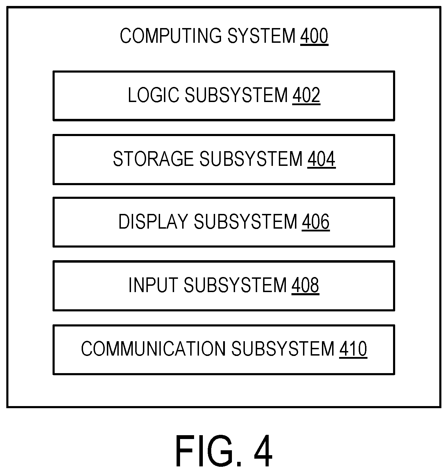

FIG. 1 schematically shows an example computing device 100 configured to implement the hardware-based processor thread allocation techniques described herein. Computing device 100 may have any suitable capabilities, hardware configuration, and form factor. It will be understood that computing device 100 may include any suitable additional or alternative components to those shown in FIG. 1. In some examples, a "computing device" as described herein may be implemented as computing system 400 described below with respect to FIG. 4. Similarly, the "microprocessors," "hardware thread allocation controllers," and "hardware accelerators" described herein may take the form of any suitable hardware logic components. For instance, such components may be implemented as logic subsystem 402 described below with respect to FIG. 4.

In the example of FIG. 1, computing device 100 includes a microprocessor 102. The microprocessor 102 may have any suitable capabilities and use any suitable underlying processing architecture. In general, the microprocessor 102 takes the form of a suitable hardware logic component configured to perform various processing functions, such as executing instructions from a computer program, processing data, controlling the timing of operations, and/or interfacing with peripheral devices.

In FIG. 1, microprocessor 102 generates a processor thread 104 for execution by one or more hardware accelerators of the computing device, as will be described in more detail below. The present disclosure generally describes processor threads as being generated by "microprocessors," although it will be understood that this is non-limiting. Rather, a processor thread may be generated by any suitable hardware logic component(s) of the computing device. In general, a processor thread refers to a sequence of programmed instructions, or "processing commands," that can be executed by a hardware accelerator of a computing device. A processor thread may be generated at any suitable time to thereby perform any suitable computing function. In various examples, processor threads may be created through the execution of software applications and/or operating system processes of the computing device.

In FIG. 1, the processor thread includes a series of processing commands 106. A processor thread may include any suitable number of one or more processing commands. Furthermore, a "processing command" may take any suitable form. In general, a "processing command" takes the form of a single operation or task that can be performed by a hardware accelerator. As non-limiting examples, processing commands may include arithmetic operations (e.g., addition, subtraction, multiplication), logical operations (e.g., AND, OR), control flow commands (e.g., FOR loops, IF-ELSE statements), data transfer instructions, bitwise operations, floating-point operations, etc.

In FIG. 1, the processor thread additionally includes a set of one or more preconditions 108 that are to be met before the processor thread is executed. A processor thread may be associated with any suitable number of one or more preconditions. Furthermore, it will be understood that such preconditions may include any of a wide variety of different conditions that may be checked or fulfilled before the processor thread is executed.

As one example, a "precondition" may include detecting that the system has suitable resource availability prior to execution of the processor thread. Resources may include memory space, available processing cycles, and/or access to required peripheral devices, as examples. For instance, in some cases, a precondition for execution of the processor thread may include detecting that there is sufficient space in memory of the computing device to store data to be generated through execution of the processor thread. As another example, a precondition may include detecting that prerequisite data associated with the processor thread has been generated - e.g., by a different, ongoing processor thread. In other words, in some examples, the processor thread may be blocked from execution until other processes have completed, thereby generating data required for the thread's execution. As additional non-limiting examples, preconditions for execution of the processor thread may include priority and scheduling constraints (e.g., execution may be delayed while higher-priority threads are executed), security/permissions constraints (e.g., verification that the thread has required security permission to access certain data), resolution of pending interrupts, power and/or thermal constraints (e.g., execution may be delayed based on device battery level), etc.

It will be understood that a processor thread may include, or otherwise be associated with, any suitable information in addition to, or instead of, the processing commands and preconditions discussed herein. For instance, in some examples, a processor thread may be associated with a unique thread identifier, thread status information (e.g., running, blocked, queued, terminated), priority information, context information (e.g. the status of any registers, program counters, stack pointers, etc.), source and/or destination addresses for data operated on by the processor thread, and/or any other suitable information relevant to the processor thread. Such information may be stored at any suitable location (e.g., any suitable data storage hardware of the computing device) and may in some cases be transmitted to, and/or otherwise accessible to, the hardware thread allocation controller.

Furthermore, in the example of FIG. 1, processor thread 104, processing commands 106, and preconditions 108 are schematically represented as if they are each transmitted together as a single data structure. However, it will be understood that this is non-limiting and only done for the sake of illustration. For instance, in some examples, the processor thread may be transmitted to the hardware thread allocation controller as a stream of processing commands - e.g., as such commands are generated by the microprocessor. Similarly, the preconditions may be transmitted to the hardware thread allocation controller at any suitable time, and may be transmitted together with, or separately from, the processing commands of the processor thread.

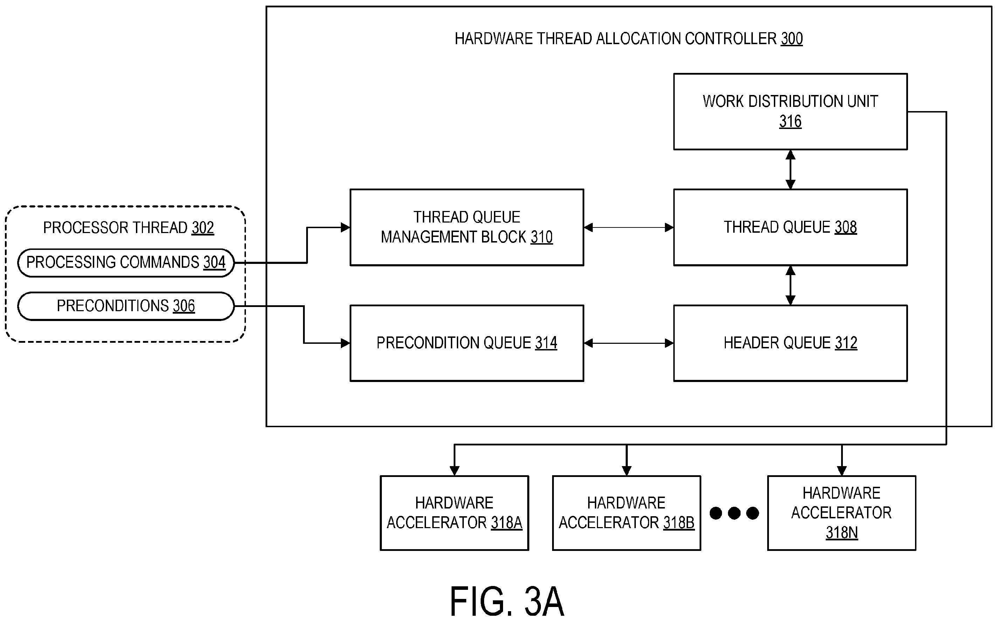

In FIG. 1, the processor thread 104 is received at a hardware thread allocation controller 110. As will be described in more detail below, the hardware thread allocation controller is implemented as a hardware logic component that allocates processor threads to different hardware accelerators of the computing device. In FIG. 1, processor thread 104 is allocated by the hardware thread allocation controller to one or more of the hardware accelerators 112A-N of the computing device. Example subcomponents of the hardware thread allocation controller will be described below with respect to FIGS. 3A-E. In some examples, the hardware thread allocation controller is implemented as logic subsystem 402 described below with respect to FIG. 4.

A "hardware accelerator" takes the form of any suitable computer logic component configured to carry out processing commands of a processor thread. As non-limiting examples, a hardware accelerator can include a Central Processing Unit (GPU) core, a Graphics Processing Unit (GPU) core, a Field-Programmable Gate Array (FPGA), an Application-Specific Integrated Circuit (ASIC), and/or a Digital Signal Processor (DSP). A computing device may include any suitable number of one or more different hardware accelerators, which may be used to independently execute any suitable number of different processor threads in parallel.

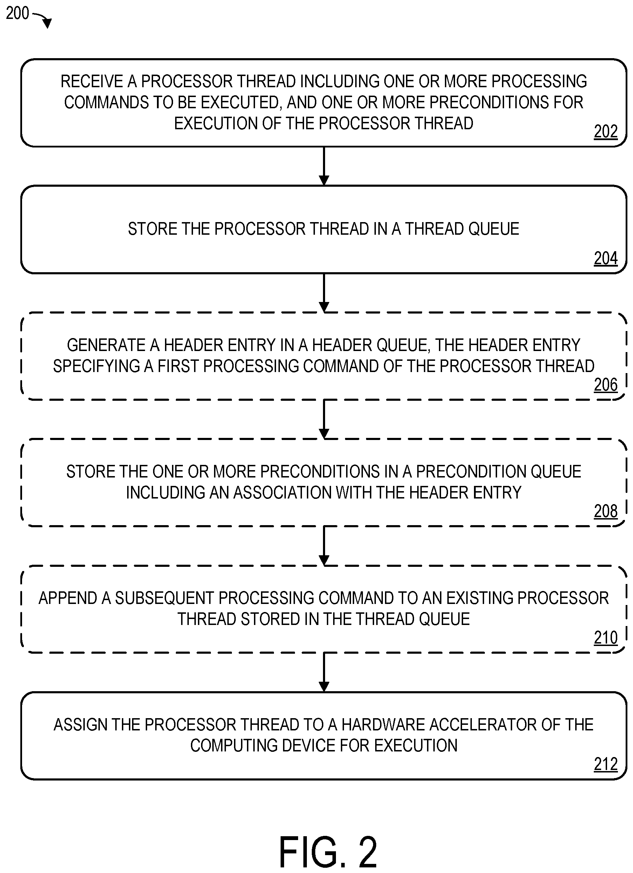

FIG. 2 illustrates an example method 200 for a hardware thread allocation controller. For instance, method 200 may be implemented by hardware thread allocation controller 110 of FIG. 1, and/or hardware thread allocation controller 300 of FIG. 3A. In general, however, method 200 may be implemented by any suitable computer hardware logic component, or a system of two or more hardware logic components working in tandem. Steps of method 200 may be initiated, terminated, and/or repeated at any suitable time and in response to any suitable condition. In some examples, method 200 is implemented by computing system 400 described below with respect to FIG. 4.

At 202, method 200 includes receiving, at the hardware thread allocation controller, a processor thread including one or more processing commands to be executed, and one or more preconditions for execution of the processor thread. This may be done substantially as described above with respect to FIG. 1 - e.g., hardware thread allocation controller 110 receives processor thread 104, which includes processing commands 106 and preconditions 108.

Another example hardware thread allocation controller is schematically shown in FIG. 3A. Specifically, in FIG. 3A, an example hardware thread allocation controller 300 receives a processor thread 302. The processor thread includes a series of one or more processing commands 304, and is associated with one or more preconditions 306 for execution of the processor thread. The processor thread is received from any suitable source. For instance, in some examples, the processor thread is generated by a microprocessor and/or other suitable hardware logic component of the computing device.

In FIG. 3A, various example subcomponents of the hardware thread allocation controller 300 are shown. Specifically, in this example, the hardware thread allocation controller includes a thread queue 308, a thread queue management block 310, a header queue 312, a precondition queue 314, and a work distribution unit 316. The work distribution unit allocates processor threads to one or more hardware accelerators 318A-N communicatively coupled with the hardware thread allocation controller.

However, it will be understood that the hardware thread allocation controller, as described herein, may comprise any suitable combination of different subcomponents, each configured to facilitate efficient thread management and scheduling within a processor multithreading environment. It is to be noted that these subcomponents, while functionally distinct, need not be limited to any particular hardware implementation. Instead, they can be realized through any suitable combination of hardware elements used in the design and fabrication of electronic devices. This includes, but is not limited to, transistors, semiconductors, logic gates, and/or circuit traces, as examples. The versatility in implementation allows these subcomponents to be integrated into various forms of hardware logic components, tailored to meet the specific requirements of the system in which they are deployed. This approach provides significant flexibility, enabling the hardware thread allocation controller to be adapted to a wide range of processor architectures and system designs, thereby enhancing its applicability and utility in diverse computational environments.

Furthermore, while FIG. 3A depicts the hardware thread allocation controller as having one each of the various subcomponents (e.g., thread queue, header queue, etc.,), this is non-limiting. Rather, any or all of the various subcomponents may be duplicated any suitable number of times within the hardware thread allocation controller. For instance, in one example, the hardware thread allocation controller may include two or more instances of each of the various subcomponents depicted within FIG. 3A, which may operate independently from one another.

Returning briefly to FIG. 2, at 204, method 200 includes storing the processor thread in a thread queue of the hardware thread allocation controller. Each processor thread may be stored in the thread queue for any suitable length of time prior to such threads being allocated to, and executed by, hardware accelerators. For instance, a processor thread may be stored in the thread queue until the preconditions for execution of the processor thread are met. In the example of FIG. 3A, information relating to processor thread 302 is stored in thread queue 308. Such information includes the sequence of processing commands 304, and may include any suitable additional information as described above. For instance, the thread queue may store a unique identifier for the processor thread, source and/or destination addresses for data used and/or generated by the processor thread, a priority level for the processor thread, etc.

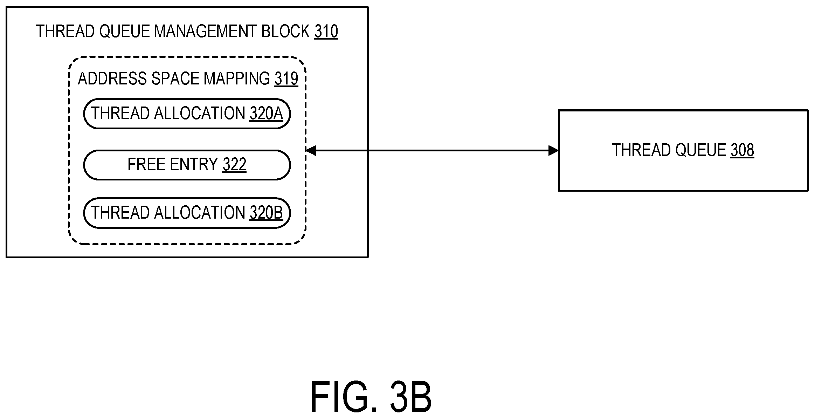

In some cases, storage of processor threads in the thread queue is controlled and managed by a thread queue management block. This is schematically illustrated with respect to FIG. 3B, again showing thread queue 308 and thread queue management block 310 of hardware thread allocation controller 300. In other words, in this example, the hardware thread allocation controller includes a thread queue management block configured to dynamically assign a subset of address space within the thread queue to the processor thread. The amount of address space allocated is based at least in part on the quantity of the processing commands of the processor thread. For instance, the thread queue may be implemented via one or more suitable hardware data storage components, which collectively provide a maximum data storage capacity. Thus, the total number of processor threads that can be stored in the thread queue may be inversely proportional to the number of processing commands in each thread - e.g., the thread queue may store a relatively large number of threads each having relatively few commands, or store a relatively smaller number of threads each having relatively more commands.

In the example of FIG. 3B, the thread queue management block maintains an address space mapping 319, in which it tracks how address space of the thread queue is allocated to different processor threads. As shown, in this example, two different thread allocations 320A and 320B have been reserved within the address space of the thread queue for two different processor threads. In this example, the thread queue management block is further configured to track portions of the address space of the thread queue corresponding to free entries within the thread queue. In FIG. 3B, the thread queue management block additionally defines a free entry 322 within the address space mapping of the thread queue. It will be understood that the example of FIG. 3B is highly simplified - e.g., in practical examples, hundreds, thousands, or more different thread allocations and/or free entries may be tracked for a single thread queue.

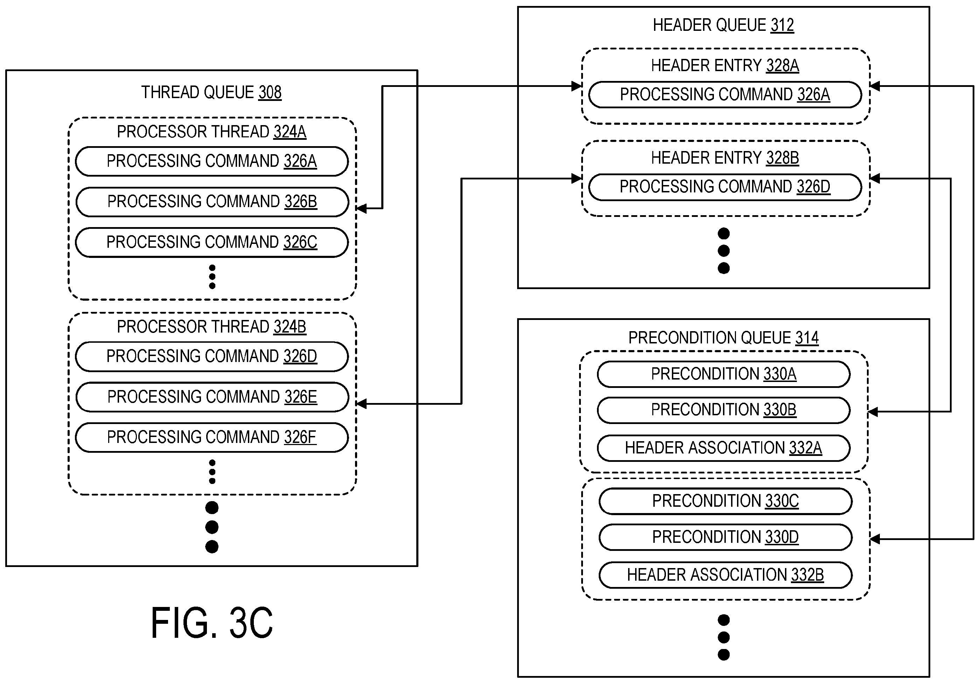

FIG. 3C schematically illustrates thread queue 308 of hardware thread allocation controller 300 in more detail. As shown, in this example, information relating to two different processor threads is stored in the thread queue, including processor threads 324A and 324B. Again, it will be understood that any suitable number of processor threads may be stored in a single thread queue, including hundreds, thousands, or more different processor threads. In FIG. 3C, several processing commands are stored in the thread queue for each processor thread. Specifically, processing commands 326A, 326B, and 326C are stored for processor thread 324A, while processing commands 326D, 326E, and 326F are stored for processor thread 324.

Returning briefly to FIG. 2, at 206, method 200 optionally includes generating a header entry in a header queue, the header entry specifying a first processing command of the processor thread. This is also schematically illustrated with respect to FIG. 3C. Specifically, in the example of FIG. 3C, processor thread 324A is associated with a header entry 328A in header queue 312. Header entry 328A stores the first processing command 326A of processor thread 324A. Similarly, processor thread 324B is associated with header entry 328B of header queue 312, which stores the first processing command 326D of processor thread 324B.

In this manner, header entries in the header queue may serve as a starting point or "trigger" for execution of a particular processor thread. For instance, as will be described in more detail below, header entries in the header queue may be associated with preconditions stored in a separate precondition queue. Upon detecting that the preconditions associated with a particular header entry are met, the header queue may notify the thread queue that the full processor thread may be released for execution.

Thus, returning briefly to FIG. 2, at 208, method 200 optionally includes storing the one or more preconditions for execution of the processor thread in a precondition queue including an association with the header entry. This is also schematically illustrated with respect to FIG. 3C, where the one or more preconditions for each processor thread are stored in a precondition queue. As shown, preconditions 330A and 330B associated with processor thread 324A are stored in precondition queue 314. Similarly, preconditions 330C and 330D are stored in precondition queue 314.

In this example, the precondition queue includes, for each processor thread, an association between the one or more preconditions for the processor thread and the header entry in the header queue. Specifically, precondition queue 314 includes a header association 332A, which associates preconditions 330A and 330B with header entry 328A. In this manner, the hardware thread allocation block tracks the preconditions that are to be met before processor thread 324A is assigned to a hardware accelerator and executed. Similarly, precondition queue 314 includes another header association 332B, which associates preconditions 330C and 330D with header entry 328B. Each header association may take any suitable form. For instance, a header association may specify an address of the header entry within the header queue, an address of the processor thread in the thread queue, a unique identifier of the header entry and/or processor thread, the quantity of the preconditions associated with the set of preconditions, etc.

Once it has been detected that the preconditions for a given processor thread are met, the precondition queue may transmit a suitable indication to the header queue, which then notifies the thread queue that a particular processor thread is ready for execution. As discussed above, each "precondition" may take the form of any suitable condition or status that is to be fulfilled before a particular processor thread is executed. Thus, the specific manner in which such conditions are monitored and detected may vary depending on the specific nature of the preconditions. In general, the hardware thread allocation controller (e.g., the precondition queue within the controller) may be communicatively coupled with any suitable other hardware components of the computing device, and may thereby receive any suitable information relating to processor thread precondition fulfillment.

In one non-limiting example, detecting when preconditions are satisfied may be done partially or entirely through receipt of semaphore indications received from other hardware components. In general, a semaphore can be used to signal the availability of a specific resource. Before a thread executes, the hardware thread allocation controller may check a semaphore to determine if relevant resources (like a shared buffer or a file) are available. If the semaphore indicates that the resource is in use (e.g., the semaphore count is zero), the hardware thread allocation controller may store the thread in the thread queue, without executing the thread until the resource becomes available. In cases where a thread's execution depends on the completion of tasks by other threads, semaphores can be used to manage these dependencies. A thread might wait on a semaphore that is signaled (released) by another thread once it has completed a prerequisite task.

As discussed above, it will be understood that the specific combination of subcomponents depicted in FIG. 3C is non-limiting. For instance, in some examples, the functions of any or all of the thread queue, header queue, and precondition queue may be combined together into a single component, and/or omitted. For instance, in one non-limiting scenario, the header queue may be omitted, while the processor threads and preconditions for each processor thread are stored in the thread queue.

As discussed above, in some examples, processing commands of the same processor thread may be received over time, rather than as a single data structure. For instance, as new processing commands are generated by the microprocessor for execution (e.g., while software applications and/or operating system functions are performed by the computing device), such processing commands may be streamed to the hardware thread allocation controller. In such cases, processing commands may be appended to existing processor threads within the thread queue, as opposed to generating new entries within the thread queue corresponding to new processor threads.

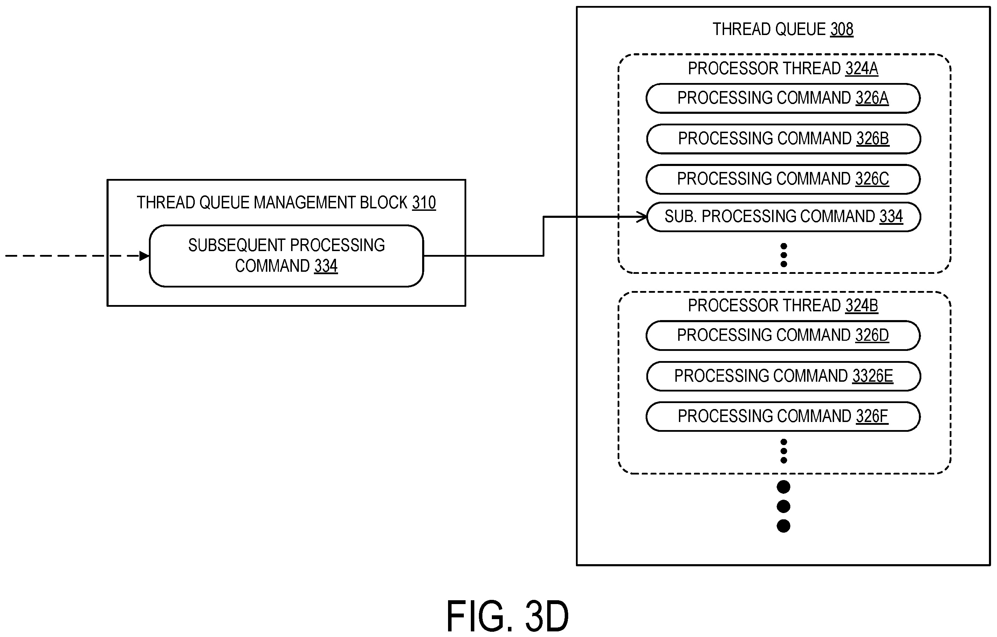

Thus, returning briefly to FIG. 2, at 210, method 200 optionally includes appending a subsequent processing command to an existing processor thread stored in the thread queue. This is schematically illustrated with respect to FIG. 3D, again showing thread queue 308 and thread queue management block 310 of hardware thread allocation controller 300. In this example, the thread queue management block receives a subsequent processing command 334. Upon determining that the subsequent processing command 334 corresponds to an existing processor thread stored in the thread queue (e.g., processor thread 324A stored in thread queue 308), the thread queue management block appends the subsequent processing command 334 to the existing processing thread 324A.

Any suitable information and criteria may be used to determine when a subsequent processing command received by the hardware thread allocation controller corresponds to an existing processor thread, rather than a new processor thread. As one example, each processor thread may be assigned a unique identifier (e.g., thread ID) when it is generated. This identifier can be transmitted along with the processing commands. For new threads, a new unique ID may be assigned, whereas for existing threads, the previously assigned ID may be used. The hardware controller can use this ID to determine whether a command is for a new thread or a continuation of an existing one.

As another example, the stream of processing commands may include a specific field or flag indicating the command type. For example, there may be a flag that specifies whether a command is a 'Thread Start', 'Thread Continue', or 'Thread End'. The hardware controller may then parse this information to understand the nature of each command.

As another example, each command associated with a thread may be assigned a sequence number. The first command of a new thread may start with a specific sequence number (e.g., 0 or 1), and subsequent commands for the thread could then increment this number. In this manner, the hardware thread allocation controller may use these sequence numbers to track the progression of each thread, and thereby determine whether a subsequent processing command corresponds to a new or existing processor thread.

As another example, the processing command may specify a memory address or instruction pointer indicating where the processing command is located in a processing thread's sequence of commands. Thus, presence of such an address or pointer may indicate that a subsequent command is associated with an existing processor thread, rather than a new processor thread.

In any case, once received at the hardware thread allocation controller, processing commands for a processor thread may be stored until the preconditions for execution of the processor thread are met. At that time, the processor thread may be assigned to a hardware accelerator for execution. Returning briefly to FIG. 2, at 210, method 200 includes, based at least in part on detecting that the one or more preconditions for execution are met, assigning the processor thread to a hardware accelerator of the computing device for execution. In other words, the hardware thread allocation controller checks whether the thread's associated preconditions have been met, and then issues the processor thread as a command for execution by a hardware accelerator.

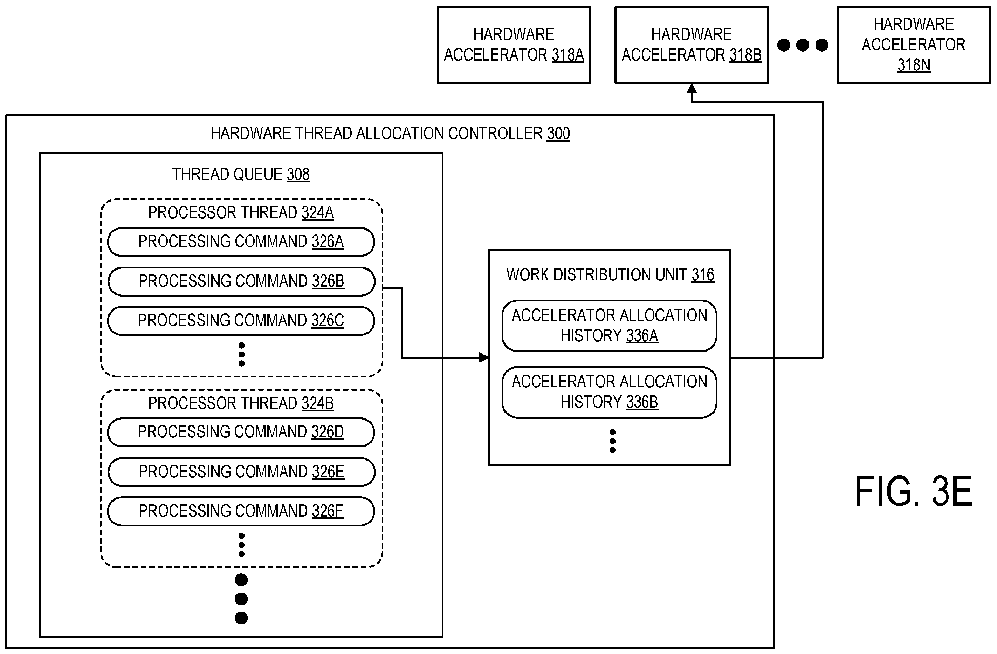

This is schematically illustrated with respect to FIG. 3E, again showing thread queue 308 and work distribution unit 316 of hardware thread allocation controller 300. The work distribution unit 316 assigns processor thread 324A to a hardware accelerator 318B for execution. In this example, the hardware accelerator is one of two or more hardware accelerators of the computing device. However, as discussed above, a computing device may include any suitable number of one or more hardware accelerators, which each may take any suitable form.

Furthermore, any suitable number of processor threads may be fulfilled by the same hardware accelerator. In some examples, processing commands of the same processor thread may be allocated between at least two different hardware accelerators. For instance, such commands may be allocated by the hardware thread allocation controller according to current accelerator availability, and/or suitability of a specific type of accelerator for a certain processing task (e.g., use of a GPU core for graphics-related processing commands). In this manner, the computing device may execute any suitable number of different processor threads in parallel.

The work distribution unit may use any suitable criteria for allocating processor threads to hardware accelerators for execution. In some examples, the work distribution unit is configured to assign processor threads to the two or more hardware accelerators based on an accelerator allocation history for each hardware accelerator. This is also illustrated with respect to FIG. 3E, where the work distribution unit stores accelerator allocation histories 336A and 336B, corresponding to hardware accelerators 318A and 318B. Thus, processor thread 324A may be assigned to hardware accelerator 318B for execution based at least in part on the accelerator allocation histories 336A and 336B.

In the example of FIG. 3E, the accelerator allocation histories are represented as being different sets of data that are specific to different hardware accelerators. However, it will be understood that this need not always be the case. For instance, in some examples, the work distribution unit (and/or other sub-components of the hardware thread allocation controller) may track accelerator allocation history in other suitable forms. For instance, in some cases, a set of accelerator allocation history need not be specific to a particular hardware accelerator, but rather may store data pertaining to any or all of the different hardware accelerators of the computing device.

An "accelerator allocation history" may similarly include any suitable information. As non-limiting examples, an allocation history may include historical data about which prior threads were allocated to which accelerators, data on the performance of each accelerator while executing different types of threads, information about the resources (memory, compute cycles, etc.) used by each thread when executed on different accelerators, records of any errors or failures encountered during previous allocations, historical performance data reflecting how well certain types of threads run on specific accelerators, etc. Such information may be stored at, and/or otherwise accessed from, any suitable source. For instance, in some examples, accelerator allocation history is stored in data storage hardware integrated into, or otherwise coupled with, the work distribution unit.

Furthermore, it will be understood that allocation of processor threads may be performed based on any suitable criteria in addition to, or instead of, accelerator allocation history. As non-limiting examples, processor thread allocation may be done on the basis of current system load (e.g., the current workload on each accelerator to provide a balanced distribution and prevent overloading any single unit); thread characteristics, such as their priority, resource requirements, and the type of processing they entail; quality of service requirements; power and/or thermal constraints, etc. In some examples, the processor thread itself (and/or specific commands within the processor thread) may specify a quantity of hardware accelerators that the processor thread should be distributed between. Thus, in some examples, an accelerator quantity specified by the processor thread may be considered as a factor during thread allocation.

The methods and processes described herein may be tied to a computing system of one or more computing devices. In particular, such methods and processes may be implemented as an executable computer-application program, a network-accessible computing service, an application-programming interface (API), a library, or a combination of the above and/or other compute resources.

FIG. 4 schematically shows a simplified representation of a computing system 400 configured to provide any to all of the compute functionality described herein. Computing system 400 may take the form of one or more personal computers, network-accessible server computers, tablet computers, home-entertainment computers, gaming devices, mobile computing devices, mobile communication devices (e.g., smart phone), virtual/augmented/mixed reality computing devices, wearable computing devices, Internet of Things (IoT) devices, embedded computing devices, and/or other computing devices.

Computing system 400 includes a logic subsystem 402 and a storage subsystem 404. Computing system 400 may optionally include a display subsystem 406, input subsystem 408, communication subsystem 410, and/or other subsystems not shown in FIG. 4.

Logic subsystem 402 includes one or more physical devices configured to execute instructions. For example, the logic subsystem may be configured to execute instructions that are part of one or more applications, services, or other logical constructs. The logic subsystem may include one or more hardware processors configured to execute software instructions. Additionally, or alternatively, the logic subsystem may include one or more hardware or firmware devices configured to execute hardware or firmware instructions. Processors of the logic subsystem may be single-core or multi-core, and the instructions executed thereon may be configured for sequential, parallel, and/or distributed processing. Individual components of the logic subsystem optionally may be distributed among two or more separate devices, which may be remotely located and/or configured for coordinated processing. Aspects of the logic subsystem may be virtualized and executed by remotely-accessible, networked computing devices configured in a cloud-computing configuration.

Storage subsystem 404 includes one or more physical devices configured to temporarily and/or permanently hold computer information such as data and instructions executable by the logic subsystem. When the storage subsystem includes two or more devices, the devices may be collocated and/or remotely located. Storage subsystem 404 may include volatile, nonvolatile, dynamic, static, read/write, read-only, random-access, sequential-access, location-addressable, file-addressable, and/or content-addressable devices. Storage subsystem 404 may include removable and/or built-in devices. When the logic subsystem executes instructions, the state of storage subsystem 404 may be transformed - e.g., to hold different data.

Aspects of logic subsystem 402 and storage subsystem 404 may be integrated together into one or more hardware-logic components. Such hardware-logic components may include program- and application-specific integrated circuits (PASIC / ASICs), program- and application-specific standard products (PSSP / ASSPs), system-on-a-chip (SOC), and complex programmable logic devices (CPLDs), for example.

The logic subsystem and the storage subsystem may cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine may be instantiated by a single computing device, or a machine may include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality may optionally be saved as one or more unexecuted modules on one or more suitable storage devices.

When included, display subsystem 406 may be used to present a visual representation of data held by storage subsystem 404. This visual representation may take the form of a graphical user interface (GUI). Display subsystem 406 may include one or more display devices utilizing virtually any type of technology. In some implementations, display subsystem may include one or more virtual-, augmented-, or mixed reality displays.

When included, input subsystem 408 may comprise or interface with one or more input devices. An input device may include a sensor device or a user input device. Examples of user input devices include a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 410 may be configured to communicatively couple computing system 400 with one or more other computing devices. Communication subsystem 410 may include wired and/or wireless communication devices compatible with one or more different communication protocols. The communication subsystem may be configured for communication via personal-, local- and/or wide-area networks.

This disclosure is presented by way of example and with reference to the associated drawing figures. Components, process steps, and other elements that may be substantially the same in one or more of the figures are identified coordinately and are described with minimal repetition. It will be noted, however, that elements identified coordinately may also differ to some degree. It will be further noted that some figures may be schematic and not drawn to scale. The various drawing scales, aspect ratios, and numbers of components shown in the figures may be purposely distorted to make certain features or relationships easier to see.

In an example, a method for a hardware thread allocation controller of a computing device comprises: receiving, at the hardware thread allocation controller, a processor thread including one or more processing commands to be executed, and one or more preconditions for execution of the processor thread; storing the processor thread in a thread queue of the hardware thread allocation controller; and based at least in part on detecting that the one or more preconditions for execution are met, assigning the processor thread to a hardware accelerator of the computing device for execution. In this example or any other example, the hardware thread allocation controller is configured to receive the processor thread, store the processor thread in the thread queue, and assign the processor thread to the hardware accelerator through hardware programming of the hardware thread allocation controller. In this example or any other example, the processor thread is associated with a header entry in a header queue of the hardware thread allocation controller, the header entry specifying a first processing command of the one or more processing commands to be executed. In this example or any other example, the one or more preconditions for the processor thread are stored in a precondition table, and wherein the precondition table includes an association between the one or more preconditions for the processor thread and the header entry in the header queue. In this example or any other example, the method further comprises receiving a subsequent processing command, determining that the subsequent processing command corresponds to an existing processor thread stored in the thread queue, and appending the subsequent processing command to the existing processor thread. In this example or any other example, the hardware thread allocation controller includes a thread queue management block configured to dynamically assign a subset of address space within the thread queue to the processor thread based on a quantity of the one or more processing commands of the processor thread. In this example or any other example, the thread queue management block is further configured to track portions of the address space of the thread queue corresponding to free entries within the thread queue. In this example or any other example, the hardware accelerator is one of two or more hardware accelerators of the computing device, and wherein the hardware thread allocation controller further comprises a work distribution unit configured to assign processor threads to the two or more hardware accelerators based on an accelerator allocation history for each hardware accelerator. In this example or any other example, processing commands of the processor thread are allocated between at least two of the two or more hardware accelerators. In this example or any other example, the one or more preconditions for execution of the processor thread include detecting that prerequisite data associated with the processor thread has been generated. In this example or any other example, the one or more preconditions for execution of the processor thread include detecting that there is sufficient space in memory of the computing device to store data to be generated through execution of the processor thread.

In an example, a computing device comprises: a hardware thread allocation controller configured to: receive, at the hardware thread allocation controller, a processor thread including one or more processing commands to be executed, and one or more preconditions for execution of the processor thread; store the processor thread in a thread queue of the hardware thread allocation controller; and based at least in part on detecting that the one or more preconditions for execution are met, assign the processor thread to a hardware accelerator of the computing device for execution. In this example or any other example, the hardware thread allocation controller is configured to receive the processor thread, store the processor thread in the thread queue, and assign the processor thread to the hardware accelerator through hardware programming of the hardware thread allocation controller. In this example or any other example, the processor thread is associated with a header entry in a header queue of the hardware thread allocation controller, the header entry specifying a first processing command of the one or more processing commands to be executed. In this example or any other example, the one or more preconditions for the processor thread are stored in a precondition table, and wherein the precondition table includes an association between the one or more preconditions for the processor thread and the header entry in the header queue. In this example or any other example, the hardware thread allocation controller includes a thread queue management block configured to dynamically assign a subset of address space within the thread queue to the processor thread based on a quantity of the one or more processing commands of the processor thread. In this example or any other example, the hardware accelerator is one of two or more hardware accelerators of the computing device, and wherein the hardware thread allocation controller further comprises a work distribution unit configured to assign processor threads to the two or more hardware accelerators based on an accelerator allocation history for each hardware accelerator. In this example or any other example, the one or more preconditions for execution of the processor thread include detecting that prerequisite data associated with the processor thread has been generated. In this example or any other example, the one or more preconditions for execution of the processor thread include detecting that there is sufficient space in memory of the computing device to store data to be generated through execution of the processor thread.

In an example, a method for a hardware thread allocation controller of a computing device comprises: receiving, at the hardware thread allocation controller, a processor thread including one or more processing commands to be executed, and one or more preconditions for execution of the processor thread; storing the processor thread in a thread queue of the hardware thread allocation controller; generating a header entry in a header queue of the hardware thread allocation controller, the header entry specifying a first processing command of the one or more processing commands to be executed; storing the one or more preconditions for the processor thread in a precondition table, the precondition table including an association between the one or more preconditions for the processor thread and the header entry in the header queue; and based at least in part on detecting that the one or more preconditions for execution are met, assigning the processor thread to a hardware accelerator of the computing device for execution. In this example or any other example, the hardware thread allocation controller is configured to receive the processor thread, store the processor thread in the thread queue, and assign the processor thread to the hardware accelerator through hardware programming of the hardware thread allocation controller. In this example or any other example, the hardware thread allocation controller includes a thread queue management block configured to dynamically assign a subset of address space within the thread queue to the processor thread based on a quantity of the one or more processing commands of the processor thread. In this example or any other example, the hardware accelerator is one of two or more hardware accelerators of the computing device, and wherein the hardware thread allocation controller further comprises a work distribution unit configured to assign processor threads to the two or more hardware accelerators based on an accelerator allocation history for each hardware accelerator.

"And/or" as used herein is defined as the inclusive or V, as specified by the following truth table:

| A | B | AVB |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method (200) for a hardware thread allocation controller (110) of a computing device (100), the method (200) comprising:
receiving (202), at the hardware thread allocation controller (110), a processor thread including one or more processing commands to be executed, and one or more preconditions for execution of the processor thread;
storing (204) the processor thread in a thread queue of the hardware thread allocation controller; and
based at least in part on detecting that the one or more preconditions for execution are met, assigning (212) the processor thread to a hardware accelerator of the computing device for execution,
wherein the hardware thread allocation controller is configured to receive the processor thread, store the processor thread in the thread queue, and assign the processor thread to the hardware accelerator through hardware programming of the hardware thread allocation controller.

2. The method of claim 1, wherein the processor thread is associated with a header entry in a header queue of the hardware thread allocation controller, the header entry specifying a first processing command of the one or more processing commands to be executed.

3. The method of claim 2, wherein the one or more preconditions for the processor thread are stored in a precondition table, and wherein the precondition table includes an association between the one or more preconditions for the processor thread and the header entry in the header queue.

4. The method of any one of the preceding claims, further comprising receiving a subsequent processing command, determining that the subsequent processing command corresponds to an existing processor thread stored in the thread queue, and appending the subsequent processing command to the existing processor thread.

5. The method of any one of the preceding claims, wherein the hardware thread allocation controller includes a thread queue management block configured to dynamically assign a subset of address space within the thread queue to the processor thread based on a quantity of the one or more processing commands of the processor thread.

6. The method of claim 5, wherein the thread queue management block is further configured to track portions of the address space of the thread queue corresponding to free entries within the thread queue.

7. The method of any one of the preceding claims, wherein the hardware accelerator is one of two or more hardware accelerators of the computing device, and wherein the hardware thread allocation controller further comprises a work distribution unit configured to assign processor threads to the two or more hardware accelerators based on an accelerator allocation history for each hardware accelerator.

8. The method of claim 7, wherein processing commands of the processor thread are allocated between at least two of the two or more hardware accelerators.

9. The method of any one of the preceding claims, wherein the one or more preconditions for execution of the processor thread include detecting that prerequisite data associated with the processor thread has been generated.

10. The method of any one of the preceding claims, wherein the one or more preconditions for execution of the processor thread include detecting that there is sufficient space in memory of the computing device to store data to be generated through execution of the processor thread.

11. A computing device (100), comprising:
a hardware thread allocation controller (110) configured to:
receive, at the hardware thread allocation controller (110), a processor thread (104) including one or more processing commands (106) to be executed, and one or more preconditions (108) for execution of the processor thread (104);
store the processor thread (104) in a thread queue (308) of the hardware thread allocation controller (110); and
based at least in part on detecting that the one or more preconditions (108) for execution are met, assign the processor thread (104) to a hardware accelerator (112) of the computing device (100) for execution,
wherein the hardware thread allocation controller (110) is configured to receive the processor thread (104), store the processor thread (104) in the thread queue (308), and assign the processor thread (104) to the hardware accelerator (112) through hardware programming of the hardware thread allocation controller (110).

12. The computing device of claim 11, wherein the processor thread is associated with a header entry in a header queue of the hardware thread allocation controller, the header entry specifying a first processing command of the one or more processing commands to be executed.

13. The computing device of claim 11 or claim 12, wherein the hardware thread allocation controller includes a thread queue management block configured to dynamically assign a subset of address space within the thread queue to the processor thread based on a quantity of the one or more processing commands of the processor thread.

14. The computing device of claims 11 to 13, wherein the hardware accelerator is one of two or more hardware accelerators of the computing device, and wherein the hardware thread allocation controller further comprises a work distribution unit configured to assign processor threads to the two or more hardware accelerators based on an accelerator allocation history for each hardware accelerator.

15. A method (200) for a hardware thread allocation controller (110) of a computing device (100), the method (200) comprising:
receiving (202), at the hardware thread allocation controller, a processor thread including one or more processing commands to be executed, and one or more preconditions for execution of the processor thread;
storing (204) the processor thread in a thread queue of the hardware thread allocation controller;
generating (206) a header entry in a header queue of the hardware thread allocation controller, the header entry specifying a first processing command of the one or more processing commands to be executed;
storing (208) the one or more preconditions for the processor thread in a precondition table, the precondition table including an association between the one or more preconditions for the processor thread and the header entry in the header queue; and
based at least in part on detecting that the one or more preconditions for execution are met, assigning (212) the processor thread to a hardware accelerator of the computing device for execution,
wherein the hardware thread allocation controller is configured to receive the processor thread, store the processor thread in the thread queue, and assign the processor thread to the hardware accelerator through hardware programming of the hardware thread allocation controller.
